# EUROPEAN PATENT SPECIFICATION

(11) **EP 1 658 767 B1**
(45) Date of publication and mention of the grant of the patent: **16.01.2008**
(21) Application number: 05077558.4
(22) Date of filing: 09.11.2005
(51) Int. Cl.: A01D 46/30

(54) **Device for working crops that grow on stalks**
Vorrichtung zum Bearbeiten von auf Stengeln wachsenden Gewächsen
Dispositif pour traiter des plantes cultivées sur des tiges

(30) Priority: 10.11.2004 NL 1027480
(43) Date of publication of application: 24.05.2006
(73) Proprietor: Beheersmaatschappij G.A. Ch.M. Jentjens B.V., 5466 AL Veghel (NL)
(72) Inventor: Plender, Johannes Leonardus, 5831 HX Boxmeer (NL); Van Linden, Jacobus Franciscus, 5406 VW Uden (NL); Noordam, Jan Corstiaan, 6824 KD Arnhem (NL); Maas, Hans Leon Margaretha Maria, 6666 HX Heteren (NL)
(74) Representative: Valkonet, Rutger

(56) References cited:
- EP-A- 0 741 961
- WO-A-99/38370
- FR-A- 2 760 595
- US-A- 4 873 644
- US-A- 5 295 325

## Description

The invention relates to a device for working crops that grow on stalks in a cultivating bed, which device and which cultivating bed are movable relative to each other, said device at least comprising first image forming means for selecting a crop on the basis of predetermined crop characteristics; gripping means, which can be placed into engagement with the selected crop on the basis of signals generated by the first image forming means; and separating means for separating the selected crop from the cultivating bed.

Such a device for harvesting mushrooms is known from EP-A-741961.

It should be noted that the term "cultivating bed" as used in this patent application is to be understood to mean: any type of surface in which or on which crops can be planted, for example the floor of a greenhouse, plant pots, cultivating tables, etc.

It is furthermore noted that the term "crop" as used in this patent application is to be understood to include all crops or plant products that grow on stalks, such as: flowers, for example chrysanthemums or roses, but also leaves, branches, vegetables, such as tomatoes, cucumbers, paprikas, aubergines, sprouts, French beans, etc.

It is furthermore noted that the term "working" as used in this patent application is to be understood to include all the operations to be carried out on a crop, such as: trimming, cutting, gathering, harvesting.

The fully automated working or manipulation of crops is a technique that is currently advancing in the horticultural industry, which technique is aimed at automating certain operations, on the one hand because workers experience this work as monotonous and ergonomically burdensome, and on the other hand in order to achieve a certain uniformity as regards the operating conditions, in view of the repetitive nature of the operations, and thus realise a guaranteed quality which is constant over time, so that damage to the crops and the resulting losses are prevented.

A device as referred to in the introduction above is very functional, providing that the crop to be worked is presented separately and in an isolated manner to the device. If the crops are closely spaced in a cultivating bed, it will be more difficult to use the device as referred to in the introduction, for one thing because the selection of a crop to be worked, which is surrounded by other crops, can take place less efficiently because of the higher density of crops.

Furthermore, because the selected crop is surrounded by other crops in the cultivating bed, it is less easy to approach by the separating means, which on the one hand may lead to unnecessary damage to the crops and loss of crops but which, in addition, makes it more difficult for the device to carry out at the harvesting operation in an efficient manner. All this will inevitably lead to damage to the crops and thus to unnecessary losses.

The object of the invention is to obviate the above drawbacks and to provide a device for working crops that grow on stalks in a cultivating bed, wherein a crop to be worked can be removed from the cultivating bed in a quick and efficient manner without damaging or otherwise disturbing the surrounding crops.

According to the invention, the device furthermore comprises second image forming means for determining the current orientation of the separating means relative to the stalk of the selected crop; manipulating means for positioning the separating means in a separating position relative to the stalk of the selected crop on the basis of signals generated by the second image forming means.

This enables a more precise but especially more rapid harvesting of crops that are normally difficult to harvest in view of their position in the cultivating bed, for example because leaves, other crops and the like render a direct approach by the separating means impossible.

More specifically, the manipulating means are arranged for moving the separating means from a starting position, in a direction substantially parallel to the stalk of the selected crop, to the separating position on the basis of signals generated by the second image forming means. This prevents the second image forming means from losing track of the originally selected crop while the working operations are being carried out and the separating means are being moved to the separating position, which might lead to the wrong crops being harvested or crops being damaged.

To enable a quick execution of the harvesting process of each crop, said starting position is located near the engaging position of the gripping means.

According to a functional embodiment, the manipulating means comprise an elongated arm having a free arm end, on which free arm end of the arm at least the separating means are mounted. The arm end enables an efficient manipulation of the separating means to the separating position in a densely grown cultivating bed, which is thus difficult to access, thus preventing damage to the surrounding crops.

In a first specific embodiment, the separating means comprise a nozzle that can be directed at the stalk of the selected crop, which nozzle is connected to a supply line for a medium under pressure. The separation (cutting through) of the stalk of the selected crop by means of a medium under pressure, for example water or compressed air, can take place in a quick and efficient manner with minimal damage to the crop and the surrounding crops. Furthermore, due to the absence of any physical contact between the separating means and the crops, no infectious transfer of contaminations, fungi and/or germs will take place, so that an undiminished quality and yield remain ensured.

A compact device having minimal constructional dimensions is characterized in that the supply line for the medium under pressure extends parallel to the arm, and that the supply line for the medium under pressure is accommodated in the arm. This enables easy manipulation of the arm in the cultivating bed without the risk of damaging the crops, so that also the loss of crops remains limited.

In a second specific embodiment of the arm, the separating means comprise a cutting blade that can be moved into contact with the stalk of the selected crop.

In both embodiments the separating means may comprise a screening element to be positioned round the stalk at the separating position, which screening element functions as an additional protection for the surrounding crops or as a stop surface for the cutting blade.

The screening element may be pivotally connected to the arm, so that the spatial dimensions will be minimal during movement of the arm through the cultivating bed so as to prevent damage to the crops.

In another functional embodiment, the second image forming means comprise an optical sensor mounted to the free end of the arm, so that a precise local image in the cultivating bed can be obtained in a simple manner so as to enable an efficient operation of the device.

More specifically, the optical sensor comprises at least one sensor element, two or more sensor elements in another embodiment, directed at a common point, enabling a quick and precise determination of the correct orientation of, for example, the stalk of the crop to be worked. The arm follows the stalk of the crop on the basis of information generated by the sensor, which information is used for driving the manipulating means. The path to be followed along the stalk by the arm is analysed in a software-implemented manner.

In a functional embodiment, the arm is configured as a borescope. In another functional embodiment, the arm is fitted with a miniature camera.

As generally a large number of crops are spaced close together in a cultivating bed, the amount of natural light in the cultivating bed is often limited. To obtain a correct visualisation of the stalk and the separating position, the arm may be provided with at least one light source near its free arm end, for example a light guide or an LED element or a laser source.

More specifically, said at least one light source is arranged for delivering a light beam that is incident at an angle to the stalk of the selected crop, wherein furthermore the second image forming means deliver signals on the basis of the line of intersection between the incident light beam and the stalk, which signals are a measure of the spacing in horizontal direction between the arm and the stalk.

The invention will now be explained in more detail with respect to a drawing, in which:
Figure 1 is a view of a device according to the invention;
Figures 2-5 are partial views of the device that is shown in figure 1;
Figures 6 and 7 show another embodiment of a device according to the invention.

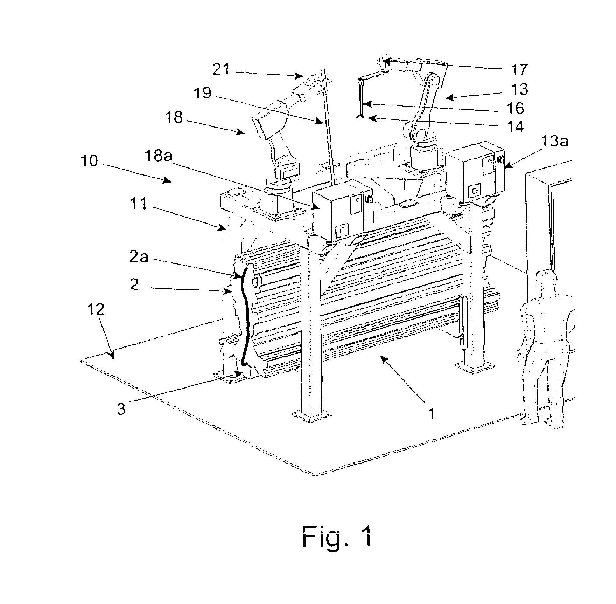

Figure 1 shows an embodiment of a device according to the invention. The harvesting device 10 is made up of a spatial construction of a frame 11 which, in this embodiment, is permanently installed on a surface 12. The device 10 according to the invention co-operates with a cultivating bed 1, in which a large number of closely spaced crops grow, which crops are shown in a stylized manner indicated at 2 in figure 1. The cultivating bed 1 is elongated in shape and is placed on, for example, a rail system (or conveyor belt) 3 installed on the supporting surface 12 of, for example, a cultivating space or hall (greenhouse). The cultivating bed 1 is moved slowly over the rail system and presented to the harvesting device 10 according to the invention.

In another embodiment, the cultivating bed 1 may be immovably present on the supporting surface of the cultivating space or hall (greenhouse), whilst the device 10 is movable with respect to the cultivating bed 1.

The device 10 comprises first image forming means (not shown), which select a specific crop on the basis of predetermined crop characteristics with a view to carrying out the harvesting operation thereon.

The device must then take hold of the crop that has thus been selected, which is done by specific gripping means 14, which are mounted on a supporting element 16 in this embodiment, which supporting element 16 forms part of first manipulating means 13, for example a robot arm. By driving the robot arm 13 and in particular the connecting unit 17 between the robot arm 13 and the gripping means 14 via the first control unit 13a on the basis of control signals generated by the first image forming means, the gripping means 14 can be moved to a position nearer the selected crop, where the gripping means engage the crop at a first engaging position.

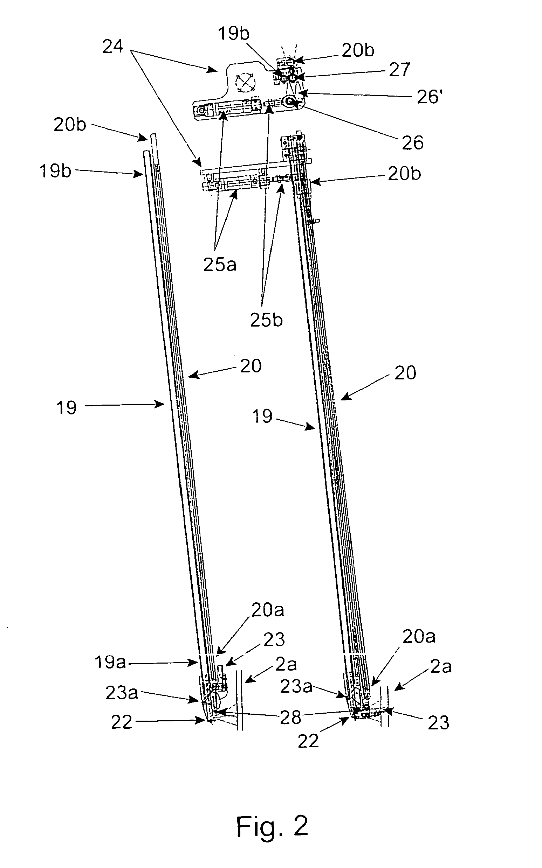

According to the invention, the device 10 comprises second image forming means (not shown in figure 1). Said second image forming means make it possible to determine the present orientation of the separating means relative to the stalk of the selected crop 2a. The separating means for separating the selected crop 2a from the cultivating bed are mounted to the free end 19a of the arm 19 (see figure 2), which elongated arm 19 is mounted on manipulating means 18 via a connecting unit 21, which manipulating means are configured as a robot arm in this embodiment as well. The robot arm 18 is driven via the control unit 18a on the basis of signals generated by the second image forming means. The robot arm 18 is arranged for placing the separating means mounted on the elongated arm 19 in a separating position relative to the stalk of the selected crop on the basis of the aforesaid signals.

Since the robot arm 18 and the supporting arm 19 are disposed above the cultivating bed 1 that moves relative to the frame 11, the selected crop 2a is approached from above rather than from one side. In the latter case, the closely spaced crops will render manipulation of the separating means difficult if not impossible altogether. By approaching the cultivating bed 1 from above, even a selected crop 2a that is surrounded by a large number of crops can be approached without difficulty.

It is also possible to approach the crop to be worked from one side, in which case the stalk is locally followed.

To that end, the separating means are also mounted on an elongated arm 19, which is lowered into the cultivating bed 2 from above. In order to be able to move the separating means to the separating position deep in the cultivating bed by means of the robot arm 18 and position it relative to the stalk of the crop 2a to be separated, the manipulating means 18 (the robot arm 18) are arranged for moving the separating means from a starting position in the upper part of the cultivating bed in a direction substantially parallel to the stalk of the selected crop 2a on the basis of the signals generated by the second image forming means.

To achieve a precise control of the device 10, said starting position is located near the engagement position at which the gripping means 14 engage the selected crop 2a. Usually, said starting position (and the engagement position) are positioned directly below the flower bud of the crop in those cases in which the crop is a flower. On the other hand, the starting position or engagement position may also be located directly below or near the axil of a lateral branch of the crop to be worked in those cases in which the crop is a fruit, for example, such as a cucumber or a courgette or a bunch of tomatoes.

Figures 2, 3 and 4 are partial views of the device that is shown in figure 1. Figure 2 shows the elongated arm 19, which is connected to the connecting unit 21 of the manipulating means 18 (the robot arm 18) with one end 19b and which is provided with the separating means 28 at its other free end 19a, which separating means are mounted to the free arm end 19a of the arm 19. In this embodiment the separating means 28 comprise a nozzle 28 for delivering a pulse jet 28' of a medium under pressure, which can be directed at the stalk 2a of the selected crop and which is connected to a supply line 29 for a medium under pressure.

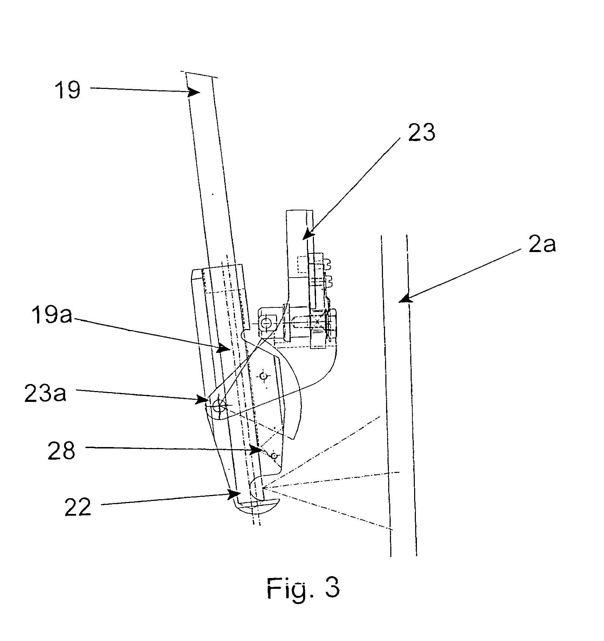

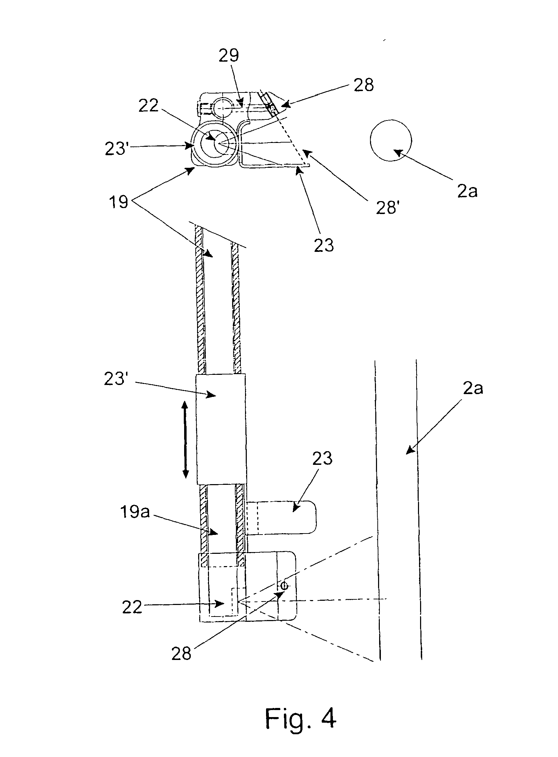

The supply line 29 for a medium under pressure, for example compressed air or water, can easily be passed through the elongated arm 19 in the direction of the connecting unit 21 (see figures 1 and 3), where the supply line 29 for the medium under pressure may be connected, in a manner that is known per se, to a supply source for the medium under pressure, for example a compressed air generator. The supply line 29 to the nozzle 28 is not shown in figures 2 and 3 for easy reference, but it is shown in figure 4.

The second image forming means 22 for determining the current orientation of the separating means 28 relative to the stalk 2a of the selected crop are likewise accommodated in the free end 19a of the elongated arm 19, comprising an optical sensor 22, which is connected to a suitable signal line, which is led through the elongated arm 19 (in a manner which is not shown, either) in the direction of the manipulating means 18, for passing image signals on to the control unit 18a.

To achieve an improved position determination of the separating means 28 relative to the stalk 2a, the optical sensor 22 may comprise several sensor elements, which may be directed at a common point. This makes it possible to determine the exact position of the stalk 2a through simple manipulation of the elongated arm 19 about its longitudinal axis. If the position image of the stalk 2a is temporarily lost during the movement of the elongated arm 19 in a direction substantially parallel to the stalk, the image sensor of 22 will be able to re-orient itself relative to the stalk 2a in this manner.

Once the manipulating means 18 have moved the elongated arm 19, in particular the separating means 28, to a desired separating position, the stalk 2a must be cut through by the separating means 28. This may be done, for example, by means of a cutting blade that is moved into contact with the stalk 2a. A drawback of this embodiment, however, is the fact that possible contaminations that remain behind on the cutting blade can infect or affect the next crops 2 to be separated, which may result in a quality loss of the entire crop or in the total loss of the crop.

A contactless separation of the stalk 2a can take place by means of a nozzle 28, through which a medium under pressure, for example water or compressed air, can be led. To prevent the jet 28' of medium under pressure that exits the nozzle 28 from damaging crops directly beside or behind the crop in question, a screening element 23 forming part of the separating means is according to the invention available, which screening element is connected to the free end 19a of the elongated arm 19 by means of a pivot point 23a.

As is clearly shown in figure 2, the screening element 23 can be moved from one position to another position. In said latter position, the screening element 23 extends around the stalk 2a of the selected crop, as a result of which the stalks surrounding the crops that have not been selected are screened from the nozzle 28.

If the separating means do not comprise a nozzle for a medium under pressure but make use of a cutting blade, the screening element 23 can function as a stop surface or anvil for the cutting blade.

The screening element 23 that is pivotally connected to the arm 19 can be manipulated between the two positions by means of a connecting arm 20, which extends parallel to the elongated arm 19. The screening element 23 is to that end pivotally connected to the lower end 20a of the connecting arm 20. The connecting arm 20 is in turn connected with the other end 20b thereof to operating means 25a-25b-26, which are mounted on a supporting plate 24, which supporting plate 24 in turn forms part of the connecting unit 21.

Numerals 25a-25b indicate an extension element 25a and an extension arm 25b, which extension arm 25 is connected to a tilting plate 26 with one end. The tilting plate 26 is in turn connected to the upper end 20b of the connecting arm 20 via the pivot point 27. The extension movement of the extension arm 25b causes the tilting plate 26 to move to the position that is indicated at 26a, in which position the tilting arm 26-26' pivots about the pivot point 27. The pivoting movement of the tilting plate 26 to the position that is indicated at 26', results in rotation/movement of the connecting arm 20, causing the screening element indicated by numeral 23 in figures 2 and 3 to be moved to the position indicated at 23'.

In this way 2a the separating means 28 can cut the stalks 2a through at the separating position as determined by the image forming means 22, without causing damage to the stalks surrounding the crops that have not been selected. Since the selected crop is held by the gripping means 14, the crop 2a that has thus been cleared from the cultivating bed 1 can be removed from the cultivating bed and be discharged from the device 10 for further processing.

Preferably, a borescope is used for achieving a precise orientation relative to the crop. The borescope is mounted in the hollow arm 19 for protection reasons.

Figure 4 shows another embodiment of the screening element 23, which is provided with a sleeve 23' that is slidably provided round the arm 19. Once the arm 19 is in the separating position and the selected crop 2a is to be separated from the cultivating bed 10, the sleeve 23' is moved downwards so that the sleeve 23' screens the image-generating element 22 (the borescope, the light sensor or the miniature camera). Said screening functions to protect the image-generating element from the mist that is released the moment the nozzle 28 is activated and a pulse jet of medium under pressure (water) is directed at the stalk 2a to be separated.

Since the sleeve 23' screens the image-generating element 22, the image-generating element 22 is prevented from coming into contact with moisture, which would interfere with the forming of images by the device.

When the sleeve 23' is moved downwards, the screening element 23 is moved downwards simultaneously therewith, causing the screening element 23 to break the pulse jet 28' exiting from the nozzle 28, thus preventing damage to the surrounding stalks.

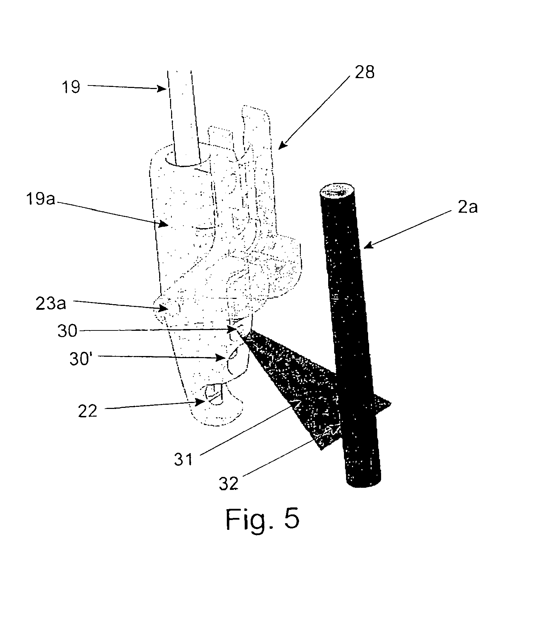

Figure 5 shows yet another embodiment of the device according to the invention. The embodiment of figure 5 comprises at least one additional light source 30, which functions to light the area around the free end 19a of the arm 19 for the benefit of the second image forming means 22. More specifically, said at least one light source 30 is arranged for delivering a light beam 31 that is incident at an angle to the stalk 2a of the selected crop. The light beam 31 incident at an angle to the stalk creates a curved cutting line 32 at the location of the second image forming means 22. The second image forming means 22 are arranged for detecting the curved cutting line 32, being capable of delivering signals on the basis of the shape of the curved cutting line 32, which signals are a measure of the spacing between the free end of the arm 19 and the stalk 2a.

This principle is also referred to as laser triangular relation, which renders the device according to the invention highly efficient as regards orienting and positioning the free end 19a relative to the separating position on the stalk 2a by means of the separating means 28.

It will be understood that the device according to the invention makes it possible to separate selected crops from the cultivating bed in a very quick and efficient manner without touching or damaging surrounding crops that have not been selected, wherein the selected crop can be approached in a very efficient manner by following the stalk of the selected crop, using image forming and positioning techniques, up to the separating position at which the stalk is to be separated. The device can be used very well in particular for working crops which are closely spaced in a cultivating bed and which can only be approached along the upper side or longitudinal side or longitudinal orientation.

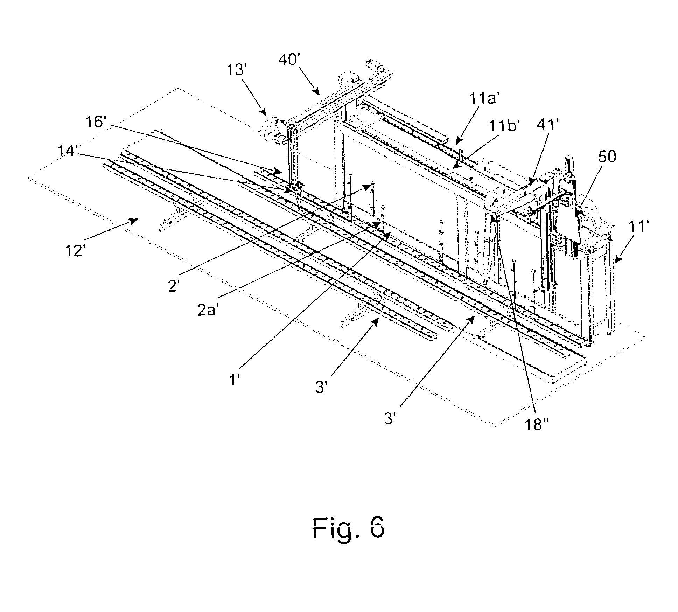

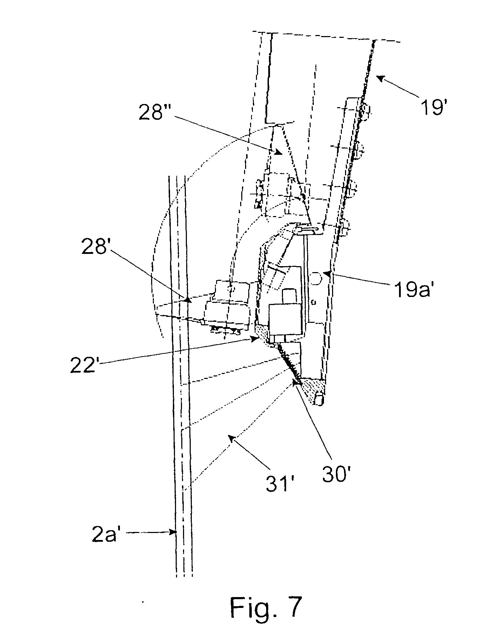

Figures 6 and 7 show further embodiments of a device according to the invention. Those parts in figures 6 and 7 that correspond to parts used in the embodiments that are shown in figures 1 and 5 are indicated by the same numerals, with the addition of an apostrophe '.

Figure 6 shows an embodiment that is different from the embodiment that is shown in figure 1, in which the frame 11 of the device according to the invention extends over the cultivating bed 1 and the rail system or the conveyor belt 3 on either side thereof. In this embodiment, the frame 11' is one-sided, i.e. extending on one side of the cultivating bed 1' and the rail system (conveyor belt) 3'.

This enables a more flexible arrangement of the device according to the invention, in particular because the frame construction 11' does not interfere with the layout of the greenhouse in which the device according to the invention is installed when this construction is used.

It is possible, for example, to construct the rail system 3' in such a manner that a section of the cultivating bed 1' that moves over the rail system 3' can be moved towards and away from the working position beside the device according to the invention.

The frame 11' comprises two servo guides 11a' and 11b', over which the manipulating means 13' and the image forming means 18', respectively, are moved along the frame 11' by suitable driving means (not shown). The manipulating means 13' as well as the image forming means 18' can be moved along the frame 11' over the servo guides 11 a' and 11 b', respectively, but they are also provided with additional servo guides 40' and 41', respectively.

Analogously to the embodiment that is shown in figure 1, the manipulating means 13' are provided with an arm 16', on which specific gripping means 14' are mounted. The arm 16' with the gripping means 14' can be moved in vertically upward and downward direction with respect to the servo guide 14', so that the entire construction of the manipulating means 13' enables positioning of the gripping means 14' in an X-Y-Z space.

A similar construction is used with the image forming means 50, which can likewise be positioned in an X-Y-Z space by means of suitable servo guides.

As figure 7 shows, the separating means 28' use second image forming means 22' that determine the appropriate separating position on the stalk 2a' of the crop to be worked. Since incident light cannot easily penetrate the cultivating bed because of the foliage in a densely packed cultivating bed 1, additional lighting means 30' are provided, which, in order to enable the second image forming means 22' to determine the separating position, expose the stalk 2a' to light 31' in a manner that corresponds to the lighting method as described with reference to the embodiment of figure 5.

Whereas the separating means of figure 4 are configured as a nozzle 28 for delivering a pulse jet of a medium underpressure (water) in the direction of the stalk 2a to be separated, the embodiment of figure 7 uses cutting means 28' made up of two knife elements to be positioned on either side of the stalk 2a', which knife elements can be moved towards each other for cutting the stalk 2a' at the separating position.

The separating means 28' of this embodiment can be set to a first position, in which they cut the stalk 2a' at the separating position, and to a second position, in which the separating means face away from the stalk 2a' in the position as indicated at 28" in figure 7. In this latter, upwardly extending position, the separating means, and more in particular the elongated arm 19', can easily be moved to a position in the compact cultivating bed 1, after which the second image forming means 22', aided by the additional lighting 30', can determine the exact separating position along the stalk 2a'.

Once the separating position has been determined, the separating means 28 can be moved from their upward (collapsed) position 28" towards the stalk 2a', in such a manner that the two knife elements of the separating means 28' are positioned on either side of the stalk 2a'.

After being separated by the separating means 28', the separated (harvested) crop is removed from the cultivating bed 1 in a manner similar to the manner that has been described above, after which the manipulating means 13' move the elongated arm 19' and the separating means 28' to the next crop to be worked.

## Claims

1. A device for working crops that grow on stalks in a cultivating bed (1), which device and which cultivating bed are movable relative to each other, said device at least comprising:
first image forming means for selecting a crop on the basis of predetermined crop characteristics;
gripping means (14), which can be placed into engagement with the selected crop on the basis of signals generated by the first image forming means; and
separating means (28) for separating the selected crop (2a) from the cultivating bed, **characterized in that** the device further comprises
- second image forming means (22) for determining the current orientation of the separating means relative to the stalk of the selected crop; and
- manipulating means (18) for positioning the separating means in a separating position relative to the stalk of the selected crop on the basis of signals generated by the second image forming means.

2. A device according to claim 1, **characterized in that** the manipulating means (18) are arranged for moving the separating means from a starting position, in a direction substantially parallel to the stalk of the selected crop, to the separating position on the basis of signals generated by the second image forming means.

3. A device according to claim 2, **characterized in that** said starting position is located near the engaging position of the gripping means.

4. A device according to any one or more of the preceding claims, **characterized in that** the manipulating means comprise an elongated arm (19) having a free arm end (19a) on which free arm end of the arm at least the separating means are mounted.

5. A device according to claim 4, **characterized in that** the separating means comprise a nozzle (28) that can be directed at the stalk of the selected crop, which nozzle is connected to a supply line (29) for a medium under pressure.

6. A device according to claim 5, **characterized in that** the supply line (29) for the medium under pressure extends parallel to the arm.

7. A device according to claim 6, **characterized in that** the supply line (29) for the medium under pressure is accommodated in the arm (19).

8. A device according to claim 4, **characterized in that** the separating means (28) comprise a cutting blade that can be moved into contact with the stalk of the selected crop.

9. A device according to any one or more of the claims 5-8, **characterized in that** the separating means comprise a screening element (23) to be positioned round the stalk at the separating position.

10. A device according to claim 8, **characterized in that** the screening element (23) is pivotally connected to the arm.

11. A device according to claim 9, **characterized in that** said screening element is in the form of a sleeve (23') that can be moved round the arm.

12. A device according to any one or more of the claims 4-11, **characterized in that** the second image forming means comprise a sensor (22) mounted to the free end of the arm.

13. A device according to claim 12, **characterized in that** the optical sensor (22) comprises at least two sensor elements directed at a common point.

14. A device according to any one or more of the claims 4-13, **characterized in that** the arm (19) is configured as a borescope.

15. A device according to any one or more of the claims 4-14, **characterized in that** the arm is provided with at least one light source (30) near its free arm end.

16. A device according to claim 15, **characterized in that** said at least one light source is arranged for delivering a light beam (31) that is incident at an angle to the stalk of the selected crop, wherein the second image forming means deliver signals on the basis of the line of intersection between the incident light beam and the stalk, which signals are a measure of the spacing in horizontal direction between the arm and the stalk.

17. A device according to claim 16, **characterized in that** said at least one light source (30) is a laser source.

## Patentansprüche

1. Einrichtung zum Bearbeiten von Nutzpflanzen, welche in einem Anbau bzw. Pflanzbeet (1) auf Stängeln wachsen, wobei die Einrichtung und das Pflanzbeet relativ zueinander bewegbar sind, wobei die Einrichtung mindestens Folgendes aufweist:
erste bilderzeugende Mittel zum Auswählen einer Nutzpflanze aufgrund von vorbestimmten Nutzpflanzeneigenschaften;
Greifmittel (14), die in den Eingriff mit der ausgewählten Nutzpflanze positioniert werden können, und zwar basierend auf Signalen, die von der ersten bilderzeugenden Mitteln erzeugt werden; und
Abtrennmittel (28), zum Abtrennen der ausgewählten Nutzpflanze (2a) von dem Pflanzbeet, **dadurch gekennzeichnet, dass** die Vorrichtung ferner Folgendes aufweist:
zweite bilderzeugende Mittel (22) zum Bestimmen der gegenwärtigen Ausrichtung der Abtrennmittel relativ zu dem Stängel der ausgewählten Nutzpflanze; und
Handhabungs- bzw. Betätigungsmittel (18) zum Positionieren der Abtrennmittel in einer Abtrennposition relativ zu dem Stängel der ausgewählten Nutzpflanze, und zwar basierend auf Signalen, die von den zweiten biiderzeugenden Mitteln erzeugt werden.

2. Einrichtung gemäß Anspruch 1, **dadurch gekennzeichnet, dass** die Betätigungsmittel (18) angeordnet sind, um die Abtrennmittel von einer Startposition in einer Richtung im Wesentlichen parallel zu dem Stängel der ausgewählten Nutzpflanze zu einer Abtrennposition zu bewegen, und zwar basierend auf den Signalen, die von den zweiten bilderzeugenden Mitteln erzeugt werden.

3. Einrichtung gemäß Anspruch 2, **dadurch gekennzeichnet, dass** die Startposition nahe der Eingriffsposition der Greifmittel gelegen ist.

4. Einrichtung gemäß irgendeinem der vorherigen Ansprüche, **dadurch gekennzeichnet, dass** die Betätigungsmittel einen langgestreckten Arm (19) mit einem freien Armende (19a) umfassen, wobei auf dem freien Armende des Arms zumindest die Abtrennmittel montiert sind.

5. Einrichtung gemäß Anspruch 4, **dadurch gekennzeichnet, dass** die Abtrennmittel eine Düse (28) aufweisen, die auf den Stängel der ausgewählten Nutzpflanze gerichtet werden kann, wobei die Düse mit einer Zulieferleitung (29) für ein unter Druck stehendes Medium verbunden ist.

6. Einrichtung gemäß Anspruch 5, **dadurch gekennzeichnet, dass** sich die Zulieferleitung (29) für das unter Druck stehende Medium parallel zu dem Arm erstreckt.

7. Einrichtung gemäß Anspruch 6, **dadurch gekennzeichnet, dass** die Zulieferleitung (29) für das unter Druck stehende Medium in dem Arm (19) untergebracht ist.

8. Einrichtung gemäß Anspruch 4, **dadurch gekennzeichnet, dass** die Abtrennmittel (28) eine Schneideklinge aufweisen, die in Kontakt mit dem Stängel der ausgewählten Nutzpflanze gebracht werden kann.

9. Einrichtung gemäß irgendeinem oder mehr der Ansprüche 5-8, **dadurch gekennzeichnet, dass** die Abtrennmittel ein Abschirmelement (23) zum Positionieren um den Stängel an der Abtrennposition aufweisen.

10. Einrichtung gemäß Anspruch 8, **dadurch gekennzeichnet, dass** das Abschirmelement (23) schwenkbar mit dem Arm verbunden ist.

11. Einrichtung gemäß Anspruch 9, **dadurch gekennzeichnet, dass** das Abschirmelement eine Hülsenform (23') besitzt, die um den Arm herum bewegt werden kann.

12. Einrichtung gemäß irgendeinem oder mehr der Ansprüche 4-11, **dadurch gekennzeichnet, dass** die zweiten bilderzeugenden Mittel einen Sensor (22) umfassen, der an dem freien Ende des Arms angebracht ist.

13. Einrichtung gemäß Anspruch 12, **dadurch gekennzeichnet, dass** der optische Sensor (22) mindestens zwei Sensorelemente umfasst, die auf einen gemeinsamen Punkt gerichtet sind.

14. Einrichtung gemäß irgendeinem oder mehr der Ansprüche 4-13, **dadurch gekennzeichnet, dass** der Arm (19) als ein Endoskop konfiguriert ist.

15. Einrichtung gemäß irgendeinem oder mehr der Ansprüche 4-14, **dadurch gekennzeichnet, dass** der Arm mit mindestens einer Lichtquelle (30) nahe dem freien Armende versehen ist.

16. Einrichtung gemäß Anspruch 15, **dadurch gekennzeichnet, dass** die mindestens eine Lichtquelle zum Liefern eines Lichtstrahls (31) angeordnet ist, welcher mit einem Winkel auf den Stängel der ausgewählten Nutzpflanze einfällt, wobei die zweiten bilderzeugenden Mittel Signale liefern basierend auf der Schnittlinie zwischen dem einfallenden Lichtstrahl und dem Stängel, wobei die Signale ein Maß sind für den Abstand in horizontaler Richtung zwischen dem Arm und dem Stängel.

17. Einrichtung gemäß Anspruch 16, **dadurch gekennzeichnet, dass** die mindestens eine Lichtquelle (30) eine Laserquelle ist.

## Revendications

1. Dispositif pour traiter des plantes cultivées sur des tiges dans un lit de culture (1), lesquels dispositif et lit de culture peuvent se déplacer l'un par rapport à l'autre, ledit dispositif comprenant au moins :
des premiers moyens de formation d'image pour sélectionner une plante cultivée en fonction de caractéristiques de plante cultivée prédéterminées ;
des moyens de saisie (14) qui peuvent être placés en prise avec la plante cultivée sélectionnée en fonction de signaux générés par les premiers moyens de formation d'image ; et
des moyens de séparation (28) pour séparer la plante cultivée sélectionnée (2a) du lit de culture, **caractérisé en ce que** le dispositif comprend en outre
des seconds moyens de formation d'image (22) pour déterminer l'orientation courante du moyen de séparation par rapport à la tige de la plante cultivée sélectionnée ; et
des moyens de manipulation (18) pour positionner les moyens de séparation dans une position de séparation par rapport à la tige de la plante cultivée sélectionnée en fonction de signaux générés par les seconds moyens de formation d'image.

2. Dispositif selon la revendication 1, **caractérisé en ce que** les moyens de manipulation (18) sont disposés pour déplacer les moyens de séparation depuis une position de départ, dans une direction sensiblement parallèle à la tige de la plante cultivée sélectionnée, jusqu'à la position de séparation en fonction des signaux générés par les seconds moyens de formation d'image.

3. Dispositif selon la revendication 2, **caractérisé en ce que** ladite position de départ est située près de la position d'entrée en prise des moyens de saisie.

4. Dispositif selon l'une quelconque ou plusieurs des revendications précédentes, **caractérisé en ce que** les moyens de manipulation comprennent un bras allongé (19) ayant une extrémité de bras libre (19a) sur laquelle extrémité de bras libre du bras sont montés au moins les moyens de séparation.

5. Dispositif selon la revendication 4, **caractérisé en ce que** les moyens de séparation comprennent une buse (28) qui peut être dirigée sur la tige de la plante cultivée sélectionnée, laquelle buse est connectée à une ligne d'alimentation (29) pour un milieu sous pression.

6. Dispositif selon la revendication 5, **caractérisé en ce que** la ligne d'alimentation (29) pour le milieu sous pression s'étend parallèlement au bras.

7. Dispositif selon la revendication 6, **caractérisé en ce que** la ligne d'alimentation (29) pour le milieu sous pression est logée dans le bras (19).

8. Dispositif selon la revendication 4, **caractérisé en ce que** les moyens de séparation (28) comprennent une lame de coupe qui peut être déplacée pour entrer en contact avec la tige de la plante cultivée sélectionnée.

9. Dispositif selon l'une quelconque ou plusieurs des revendications 5 à 8, **caractérisé en ce que** les moyens de séparation comprennent un élément de protection (23) devant être positionné autour de la tige dans la position de séparation.

10. Dispositif selon la revendication 8, **caractérisé en ce que** l'élément de protection (23) est connecté de manière pivotante au bras.

11. Dispositif selon la revendication 9, **caractérisé en ce que** l'élément de protection a la forme d'un manchon (23') qui peut être déplacé autour du bras.

12. Dispositif selon l'une quelconque ou plusieurs des revendications 4 à 11, **caractérisé en ce que** les seconds moyens de formation d'image comprennent un capteur (22) monté sur l'extrémité libre du bras.

13. Dispositif selon la revendication 12, **caractérisé en ce que** le capteur optique (22) comprend au moins deux éléments de capteur dirigés sur un point commun.

14. Dispositif selon l'une quelconque ou plusieurs des revendications 4 à 13, **caractérisé en ce que** le bras (19) est configuré comme un endoscope.

15. Dispositif selon l'une quelconque ou plusieurs des revendications 4 à 14, **caractérisé en ce que** le bras est pourvu d'au moins une source de lumière (30) à proximité de son extrémité de bras libre.

16. Dispositif selon la revendication 15, **caractérisé en ce que** ladite au moins une source de lumière est disposée pour fournir un rayon de lumière (31) qui est incident au niveau d'un angle à la tige de la plante cultivée sélectionnée, dans lequel les seconds moyens de formation d'image émettent des signaux en fonction de la ligne d'intersection entre le rayon de lumière incident et la tige, lesquels signaux sont une mesure de l'espacement dans la direction horizontale entre le bras et la tige.

17. Dispositif selon la revendication 16, **caractérisé en ce que** ladite au moins une source de lumière (30) est une source laser.
